# EUROPEAN PATENT APPLICATION

(11) **EP 4 317 982 A1**
(43) Date of publication of application: **07.02.2024**
(21) Application number: 21933243.4
(22) Date of filing: 03.12.2021
(51) Int. Cl.: G01N 35/00, G01N 35/10

(54) **AUTOMATED ANALYSIS DEVICE**

(30) Priority: 26.03.2021 JP 2021052718
(71) Applicant: HITACHI HIGH-TECH CORPORATION, Tokyo 105-6409 (JP)
(72) Inventor: IWASE, Yuichi, Tokyo 105-6409 (JP); MIYAKAWA, Takushi, Tokyo 105-6409 (JP); MIYAMOTO, Shunsuke, Tokyo 105-6409 (JP); MIYAKE, Masafumi, Tokyo 105-6409 (JP)
(74) Representative: MERH-IP Matias Erny Reichl Hoffmann Patentanwälte PartG mbB
(86) International application number: PCT/JP2021/044510
(87) International publication number: WO 2022/201645

(57) **Abstract**

The present invention achieves an automated analysis device enabling automatic detection of failure in a plunger in a syringe pump unit. This automated analysis device is provided with: a sample dispensing mechanism that has a liquid level sensing function and discharges a sample into a. liquid storage container 11; a reagent dispensing mechanism 60 for discharging a reagent into the liquid storage container 11; and a control unit for controlling operation of the sample dispensing mechanism and the reagent dispensing mechanism 60 and analyzing the sample. The sample dispensing mechanism and the reagent dispensing mechanism each have a plunger 45 for suctioning in and expelling liquid, and a plunger drive unit 47, 48, 49 for driving the plunger 45. The control unit controls operation with the plunger drive unit 47, 48, 49 of the reagent dispensing mechanism 60 so that the plunger 45 moves reciprocally by a backlash distance a predetermined number of times. Failure of the plunger 45 is detected by detecting, using the liquid level sensing function, the amount of liquid discharged into the liquid storage container 11.

## Description

### Technical Field

The present invention relates to an automated analysis device including a syringe pump unit.

### Background Art

In an automated analysis device, a syringe pump unit is used to discharge sample or a reagent by a predetermined amount with high accuracy. The syringe pump unit is introduced into a flow path, and mainly includes a housing portion, a plunger unit, and a motor drive unit.

In general, solenoid valves are provided in flow paths upstream and downstream of the syringe pump unit. Power generated by a motor unit drive unit is transmitted to the plunger unit, thereby changing a volume in a housing. Suction and discharge can be performed between the connected flow paths by an operation of the syringe pump unit and control of the solenoid valves.

PTL 1 discloses a technique in which an automated analysis device detects dispensing abnormality without wastefully consuming a specimen, a reagent, or the like and appropriately specifies a failure portion.

In the technique disclosed in PTL 1, a dispensing abnormality detection unit obtains an amount of liquid in a reaction container based on a liquid level of the reaction container after first reagent dispensing, after specimen dispensing, and after second reagent dispensing, which is sensed by a liquid-level sensing signal from a liquid-level sensing device, and detects occurrence of the dispensing abnormality based on the amount of liquid.

### Citation List

### Patent Literature

PTL 1: JP2009-210336A

### Summary of Invention

### Technical Problem

Here, in the syringe pump unit, there is a gap called a backlash between components, that is, the motor drive unit the plunger unit.

When there is a backlash, since the power of the motor drive unit is not transmitted to the plunger unit in a region of the backlash, accuracy of the power transmission deteriorates, and furthermore, a dispensing performance is affected.

In the syringe pump unit, a highly accurate aspiration and discharge operation is required, and a plunger fixing nut is provided in the syringe pump unit to remove the backlash.

By removing the backlash between the plunger unit and the motor drive unit by the plunger fixing nut, highly accurate dispensing can be ensured.

Here, the syringe pump unit requires maintenance such as periodical cleaning to ensure the highly accurate dispensing. At a time of maintenance work, it is necessary to remove the components. However, after the maintenance work, in a situation where the plunger fixing nut is forgotten to be attached or the plunger fixing nut is not correctly attached and there is a backlash, soundness of the syringe is lost, the dispensing abnormality occurs in the syringe pump unit, and highly accurate aspiration and discharge operation is difficult.

When the dispensing abnormality due to forgetting to attach the plunger fixing nut of the syringe pump unit occurs, the occurrence of the dispensing abnormality can be detected, but it is difficult to detect that the reason is forgetting to attach the plunger fixing nut.

In the technique disclosed in PTL 1, the dispensing abnormality can be detected, and failure in a dispensing probe can be specified, but it is difficult to detect whether there is a nut for plunger fixing. To determine whether there is dispensing abnormality due to absence of the nut for plunger fixing, it is necessary to disassemble the syringe pump unit.

An object of the invention is to implement an automated analysis device and a failure detection method of an automated analysis device enabling automatic detection of failure in a plunger in a syringe pump unit.

### Solution to Problem

To achieve the above object, the invention is configured as follows.

An automated analysis device includes: a sample dispensing mechanism having a liquid-level sensing function and configured to discharge a sample into a liquid storage container; a reagent dispensing mechanism configured to discharge a reagent into the liquid storage container; and a control unit configured to control operations of the sample dispensing mechanism and the reagent dispensing mechanism and analyze the sample, in which the sample dispensing mechanism and the reagent dispensing mechanism each include a plunger configured to aspirate and discharge liquid and a plunger drive unit configured to drive the plunger, and the control unit performs operation control by the plunger drive unit of at least one of the sample dispensing mechanism or the reagent dispensing mechanism such that the plunger moves reciprocally a predetermined number of times by any distance among distances from a minimum distance smaller than a backlash to a maximum distance larger than the backlash, and detects failure of the plunger by detecting an amount of liquid discharged into the liquid storage container by the liquid-level sensing function.

In addition, a failure detection method of an automated analysis device is provided. The automated analysis device includes: a sample dispensing mechanism having a liquid-level sensing function and configured to discharge a sample into a liquid storage container; a reagent dispensing mechanism configured to discharge a reagent into the liquid storage container; and a control unit configured to control operations of the sample dispensing mechanism and the reagent dispensing mechanism and analyze the sample, the sample dispensing mechanism and the reagent dispensing mechanism each including a plunger configured to aspirate and discharge liquid and a plunger drive unit configured to drive the plunger. The failure detection method of the automated analysis device includes: performing operation control by the plunger drive unit of at least one of the sample dispensing mechanism or the reagent dispensing mechanism such that the plunger moves reciprocally a predetermined number of times by any distance among distances from a minimum distance smaller than a backlash to a maximum distance larger than the backlash; and detecting failure of the plunger by detecting an amount of liquid discharged into the liquid storage container by the liquid-level sensing function.

### Advantageous Effects of Invention

According to the invention, an automated analysis device enabling automatic detection of failure in a plunger in a syringe pump unit can be implemented.

### Brief Description of Drawings

[FIG. 1] FIG. 1 is an overall schematic diagram of an electrolyte analysis device to which Embodiment 1 is applied.
[FIG. 2] FIG. 2 is a view showing an operation when a plunger fixing nut is not provided in a syringe pump unit.
[FIG. 3] FIG. 3 is an enlarged view of a portion A in FIG. 2.
[FIG. 4] FIG. 4 is a view showing a transition of a backlash when the plunger fixing nut is not provided in the syringe pump unit.
[FIG. 5] FIG. 5 is a view showing an operation when the plunger fixing nut is provided in the syringe pump unit.
[FIG. 6] FIG. 6 is an enlarged view of a portion B in FIG. 5.
[FIG. 7] FIG. 7 is a view showing the syringe pump unit which is a reagent dispensing mechanism.
[FIG. 8] FIG. 8 is an operation flowchart for detecting whether the plunger fixing nut is provided in the syringe pump unit.
[FIG. 9] FIG. 9 is an explanatory view in a normal state when there is liquid in a dilution tank.
[FIG. 10] FIG. 10 is an explanatory view in an abnormal state when there is no liquid in the dilution tank.
[FIG. 11] FIG. 11 is a diagram showing control blocks in a control device for performing operations of the flowchart shown in FIG. 8.
[FIG. 12] FIG. 12 is a partial explanatory view of a biochemical analysis device to which Embodiment 2 is applied.

### Description of Embodiments

Hereinafter, embodiments according to the invention will be described with reference to the accompanying drawings.

### Embodiments

### (Embodiment 1)

An example of an electrolyte analysis device as an automated analysis device will be described.

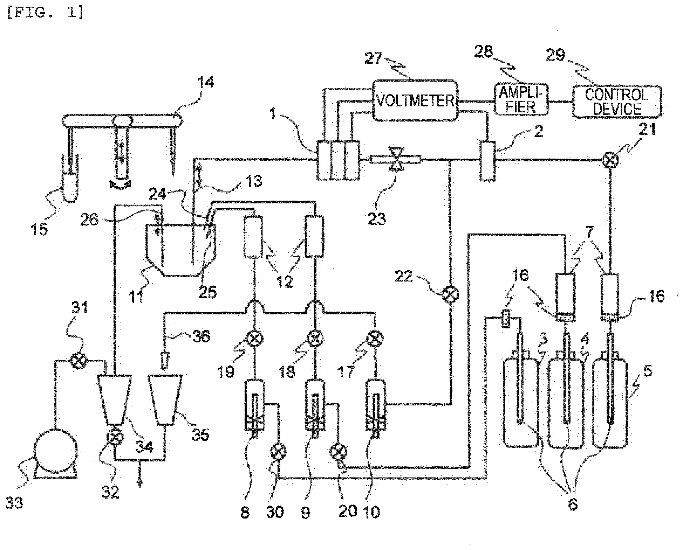

FIG. 1 is an overall schematic diagram of the electrolyte analysis device that is a flow-type electrolyte analysis device using an ion-selective electrode. Main mechanisms of the electrolyte analysis device include five mechanisms including a sample dispensing unit, an ISE electrode unit, a reagent unit, a mechanism unit, and a waste liquid mechanism, and a control device that controls the five mechanisms and performs analysis of a sample such as calculation of an electrolyte concentration based on a measurement result.

The sample dispensing unit includes a sample probe 14. A sample such as a patient specimen held in a sample container 15 is dispensed by the sample probe 14, and is drawn into the analysis device.

The ISE electrode unit includes a dilution tank 11, a sipper nozzle 13, a dilute solution nozzle 24, an internal standard solution nozzle 25, an ISE electrode (the ion-selective electrode) 1, a reference electrode 2, a pinch valve 23, a voltmeter 27, and an amplifier 28. The sample dispensed by the sample dispensing unit is discharged into the dilution tank 11 and diluted and stirred by a dilute solution discharged from the dilute solution nozzle 24 into the dilution tank 11. The sipper nozzle 13 is connected to the ISE electrode 1 by a flow path, and a diluted sample solution aspirated from the dilution tank 11 is sent to the ISE electrode 1. Meanwhile, a reference electrode solution contained in a reference electrode solution bottle 5 is sent to the reference electrode 2 by operating a sipper syringe 10 in a state in which the pinch valve 23 is closed. When the diluted sample solution sent to an ISE electrode flow path and the reference electrode solution sent to a reference electrode flow path are brought into contact with each other, the ISE electrode 1 and the reference electrode 2 are electrically connected to each other. The ISE electrode unit measures a concentration of a specific electrolyte contained in the sample based on a potential difference between the ISE electrode 1 and the reference electrode 2.

A control device (control unit) 29, which is an electrolyte analysis unit, calculates and displays an ion concentration in the specimen based on an obtained electromotive force for each type of ions. The sample solution remaining in the dilution tank 11 is drained by the waste liquid mechanism.

To correct a potential variation due to an influence of a temperature change or the like, after one sample measurement and before next sample measurement, an internal standard solution is discharged through the internal standard solution nozzle 25 into the dilution tank 11, and then the measurement is performed.

The reagent unit includes aspiration nozzles 6 each aspirating a reagent adjusted to a predetermined ion concentration from a reagent container, degassing mechanisms 7, and filters 16, and supplies the reagent necessary for the measurement. When an electrolyte measurement is performed, three kinds of reagents including the internal standard solution, the dilute solution, and the reference electrode solution are used as the reagent, and an internal standard solution bottle 3 containing the internal standard solution, a dilute solution bottle 4 containing the dilute solution, and the reference electrode solution bottle 5 containing the reference electrode solution are set in the reagent unit.

The internal standard solution bottle 3 and the dilute solution bottle 4 are connected to the internal standard solution nozzle 25 and the dilute solution nozzle 24, respectively, through flow paths via the filters 16, and the nozzles are provided in a shape in which tips thereof are introduced into the dilution tank 11. The reference electrode solution bottle 5 is connected to the reference electrode 2 through a flow path via the filter 16. The degassing mechanism 7 is connected to each of a flow path between the dilute solution bottle 4 and the dilution tank 11 and a flow path between the reference electrode solution bottle 5 and the reference electrode 2, and degassed reagents are supplied into the dilution tank 11 and the reference electrode 2.

The mechanism unit includes an internal standard solution syringe 8, a dilute solution syringe 9, the sipper syringe 10, solenoid valves 17, 18, 19, 20, 21, 22, and 30, and a preheat 12, and performs operations such as liquid sending in each mechanism or between the mechanisms. For example, the internal standard solution and the dilute solution which are the reagents are sent and discharged into the dilution tank 11 by the internal standard solution syringe 8, the dilute solution syringe 9, and operations of the solenoid valves provided in the flow paths.

The waste liquid mechanism includes a first waste liquid nozzle 26, a second waste liquid nozzle 36, a vacuum bin 34, a waste liquid receiver 35, a vacuum pump 33, and solenoid valves 31 and 32, and drains the sample solution remaining in the dilution tank 11 and a reaction solution remaining in the flow path of the ISE electrode unit.

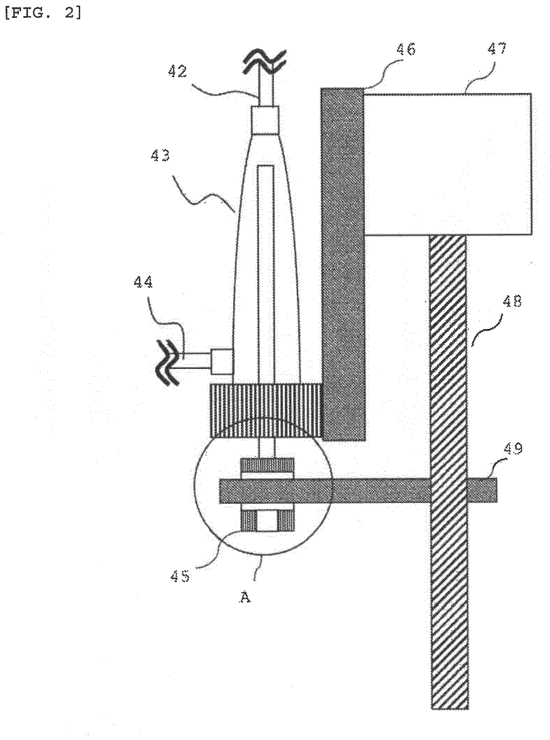

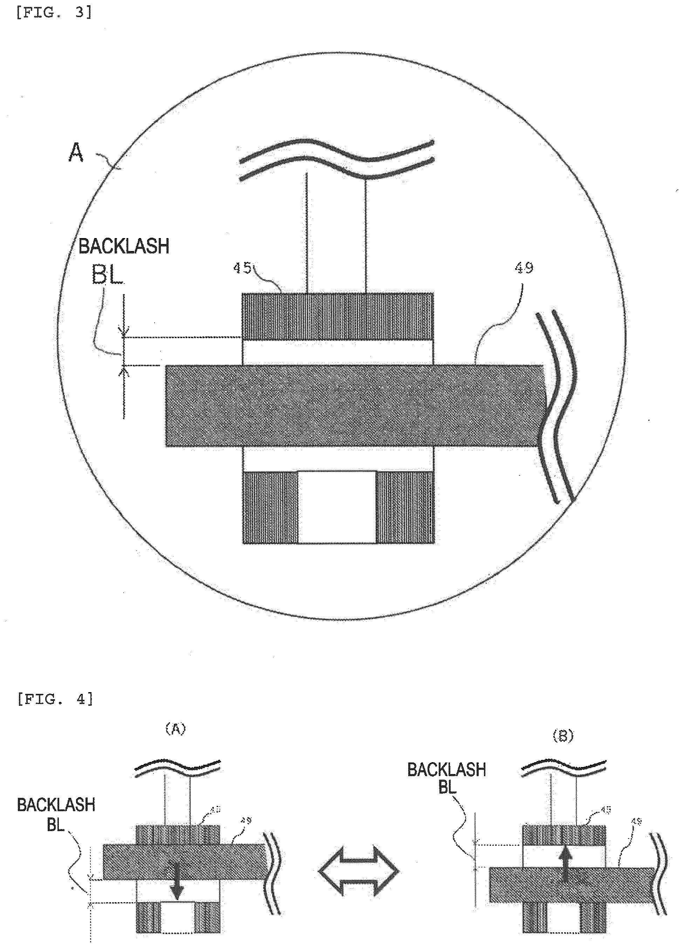

FIGS. 2 and 3 show a schematic configuration of a syringe pump unit provided in the internal standard solution syringe 8, the dilute solution syringe 9, or the sipper syringe 10 shown in FIG. 1, and are views showing an operation when a plunger fixing nut 50 to be described later is not provided in the syringe pump unit.

In FIG. 2, a ball screw 48 is rotated by a motor 47 fixed to a base 46, and a drive plate 49 moves up and down. When the drive plate 49 moves up and down, a plunger 45 moves up and down, whereby liquid flows into an inlet-side flow path 44 connected to a housing 43, and the liquid is discharged from an outlet-side flow path 42 connected to the housing 43.

FIG. 3 is an enlarged view of a portion A in FIG. 2. As shown in FIG. 3, when the plunger fixing nut 50 is not provided, a backlash BL is generated between the drive plate 49 and the plunger 45.

FIG. 4 is a view showing a transition of the backlash when the plunger, fixing nut 50 to be described later is not provided in the syringe pump unit. (A) of FIG. 4 shows a liquid aspiration operation, and (B) of FIG. 4 shows a liquid discharge operation. As shown in FIG. 4, even when the drive plate 49 moves up and down (moves reciprocally) by a distance of the backlash BL, the plunger 45 does not move up and down and is in a stationary state.

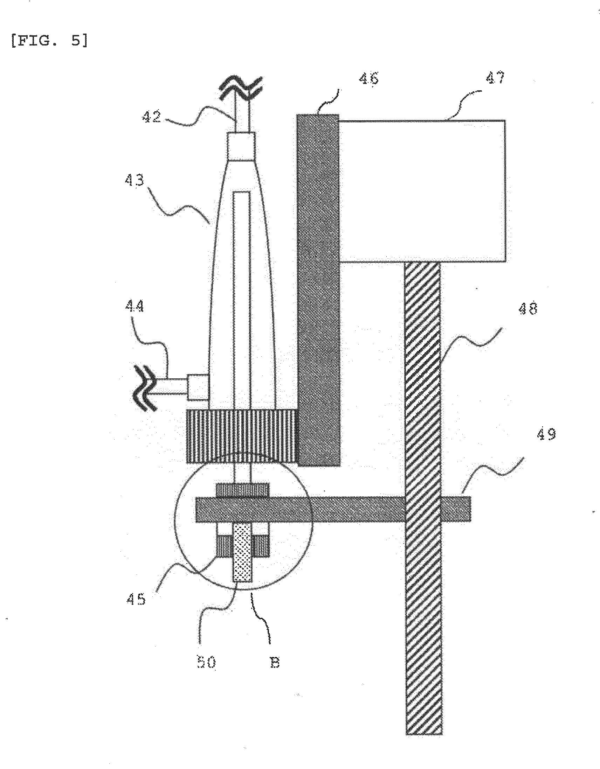

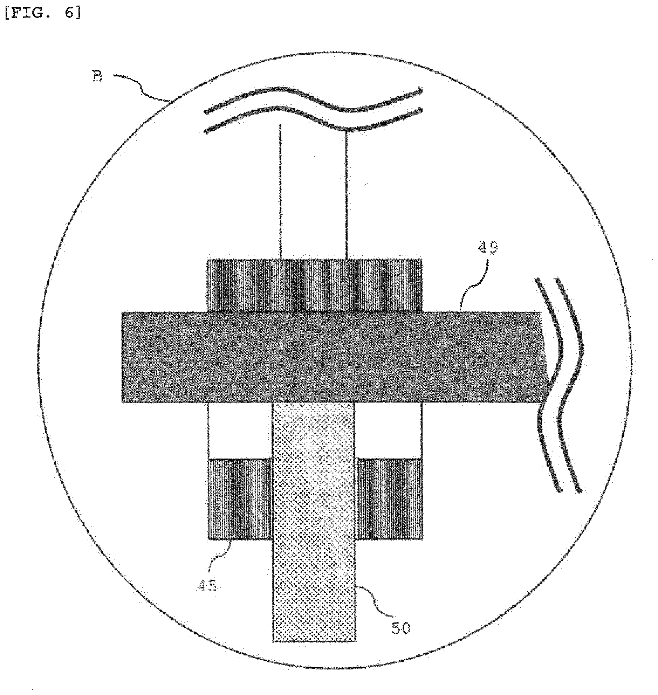

FIG. 5 is a view showing an operation when the plunger fixing nut 50 is provided in the syringe pump unit. Further, FIG. 6 is an enlarged view of a portion B in FIG. 5. As shown in FIGS. 5 and 6, when the plunger fixing nut 50 that fixes the plunger 45 and the drive plate 49 is provided in the syringe pump unit, there is no backlash BL. Therefore, the plunger 45 moves up and down as the drive plate 49 moves up and down, and a state is avoided in which the plunger 45 is in the stationary state even when the drive plate 49 moves up and down.

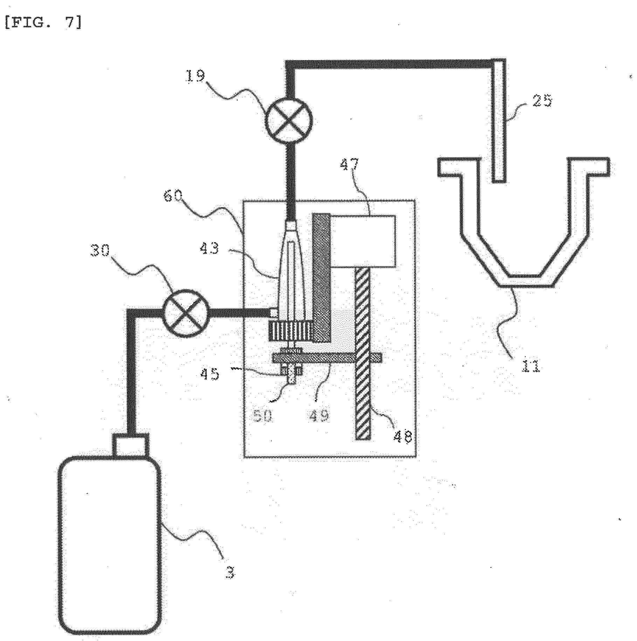

FIG. 7 is a view showing a syringe pump unit 60 that is a reagent dispensing mechanism, and is a view showing the syringe pump unit 60 that aspirates the internal standard solution as the reagent from the internal standard solution bottle 3 containing the internal standard solution and discharges the internal standard solution from the internal standard solution nozzle (a reagent nozzle) 25 into the dilution tank 11. A plunger drive unit is formed by the motor 47, the ball screw 48, and the drive plate 49.

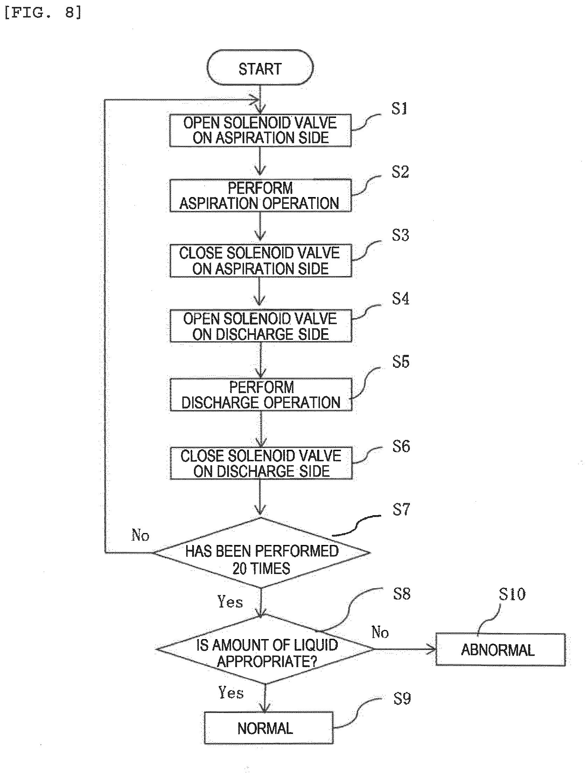

FIG. 8 is an operation flowchart for detecting whether the plunger fixing nut 50 is provided in the syringe pump unit 60 according to Embodiment 1. With reference to FIGS. 7 and 8, the syringe pump unit 60 will be described as an example of presence or absence detection on the plunger fixing nut 50.

In FIG. 7, the internal standard solution contained in the internal standard solution bottle 3 is discharged into the dilution tank 11 via the solenoid valve. 30 on an aspiration side, the syringe pump unit 60, the solenoid valve 19 on a discharge side, and the internal standard solution nozzle 25.

Here, the distance of the backlash BL between the plunger 45 and the drive plate 49 according to Embodiment 1 is 1.0 mm, and a drive resolution of the motor 47 is 20 [µl/mm]. That is, in Embodiment 1, a size of the backlash BL corresponds to a drive amount of 20 µl. Accordingly, an aspiration and discharge operation of 20 µl is repeatedly performed. That is, an operation control unit 291 to be described later performs operation control such that the plunger 45 moves reciprocally by the distance of the backlash BL.

A specific processing procedure of the aspiration and discharge operation will be described with reference to a flowchart of FIG. 8.

The solenoid valve 30 on the aspiration side is opened (step S1), and the aspiration operation of 20 µl of the syringe pump unit 60 is performed (step S2). Next, the solenoid valve 30 on the aspiration side is closed (step S3), and the solenoid valve 19 on the discharge side is opened (step S4). Then, the discharge operation of 20 µl of the syringe pump unit 60 is performed (step S5), and the solenoid valve 19 on the discharge side is closed (step S6).

It is determined whether the aspiration and discharge operation of steps S1 to S6 is performed 20 times, and if the aspiration and discharge operation is not performed 20 times, processing returns to step S1 (step S7).

In step S7, if the aspiration and discharge operation is performed 20 times, the processing proceeds to step S8, and it is determined whether an amount of liquid in the dilution tank 11 is appropriate.

When the aspiration and discharge operation of the syringe pump unit 60 is performed 20 times, when the syringe pump unit 60 is in a normal state of being provided with the plunger fixing nut 50, 20 µl × 20 times = 400 µl of the liquid is stored in the dilution tank 11.

On the other hand, when there is a backlash BL, the liquid is not discharged into the dilution tank 11. This is because the power of the motor 47 is not transmitted to the plunger 45 because there is a backlash BL as described above.

In step S8, if the amount of liquid in the dilution tank 11 is appropriate, the processing proceeds to step S9, and it is determined that the syringe pump unit 60 is in the normal state of being provided with the plunger fixing nut 50.

In step S8, if the amount of liquid in the dilution tank 11 is not appropriate, the processing proceeds to step S10, and it is determined that the syringe pump unit 60 is in an abnormal state of being not provided with the plunger fixing nut 50.

The determination of whether the amount of liquid is appropriate in step S8 is performed by using a liquid-level sensing function of the sample probe 14. As a detection method, after the aspiration and discharge operation, the sample probe 14 is lowered from above the dilution tank 11 to a predetermined height. The height is a height which the liquid reaches when being discharged normally. Alternatively, to reduce a risk of erroneous determination, the height is set to be equal to or less than the height at which the liquid is normally discharged.

The height needs to be appropriately set depending on a container shape of the dilution tank 11 and the number of repetitions of aspiration and discharge.

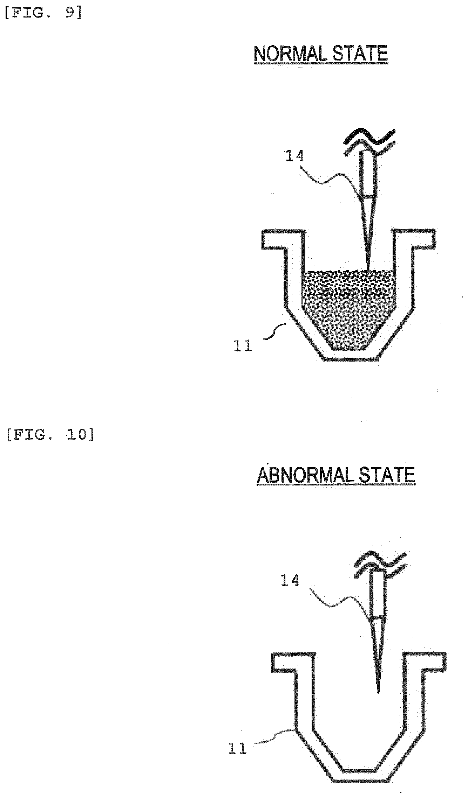

After the sample probe 14 is lowered, it is detected whether a tip of the sample probe 14 having the liquid-level sensing function is in contact with the liquid. As shown in FIG. 9, if there is liquid in the dilution tank 11, it is determined as normal, and as shown in FIG. 10, if there is no liquid in the dilution tank 11, it is determined as abnormal. If it is determined as abnormal, a user is notified, by a display unit 40 to be described later, of the occurrence of the backlash by a method such as an alarm output, and prompted to attach the plunger fixing nut 50.

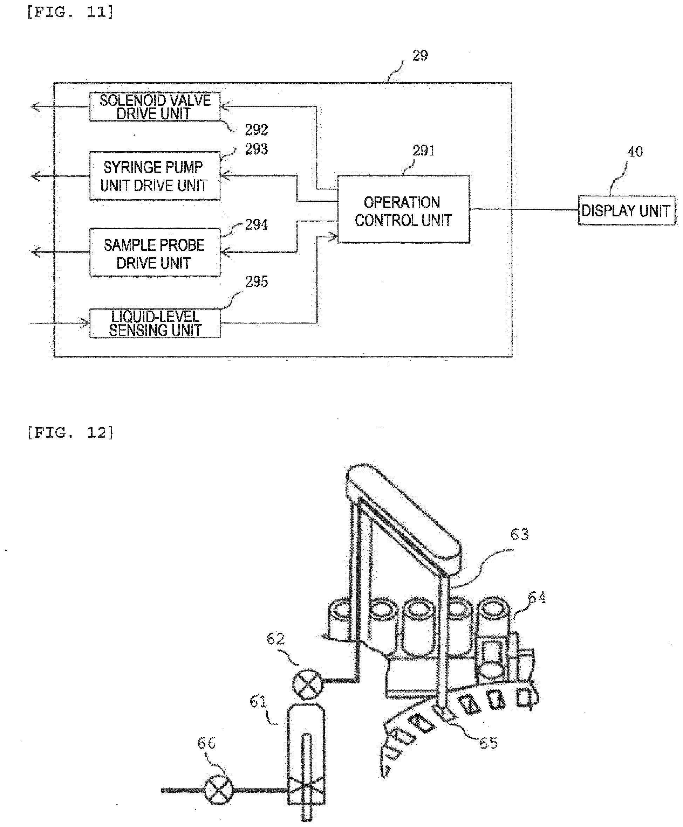

FIG. 11 is a diagram showing control blocks in the control device 29 for performing operations of the flowchart shown in FIG. 8. Illustration of another function such as a sample analysis function in the control device 29 is omitted.

In FIG. 11, a solenoid valve drive unit 292 supplies an operation command signal to the solenoid valves 19 and 30 to perform an opening and closing operation. A syringe pump unit drive unit 293 supplies an operation command signal to the motor 47 of the syringe pump unit 60 to operate the plunger 45.

A sample probe drive unit 294 drives the sample probe 14 to perform a lowering operation and a raising operation into and from the dilution tank 11.

A liquid-level sensing unit 295 senses the contact of the tip of the sample probe 14 with the liquid level by the liquid-level sensing function.

The operation control unit 291 performs operation control such that the solenoid valve drive unit 292, the syringe pump unit drive unit 293, and the sample probe drive unit 294 perform the operations of the flowchart shown in FIG. 8.

Further, when receiving a liquid-level sensing signal from the liquid-level sensing unit 295, the operation control unit 291 determines whether there is a liquid level up to a predetermined height, and causes the display unit 40 to display normal if normal. When the liquid level cannot be detected at the predetermined height even though the lowering operation is performed on the sample probe 14 in the dilution tank 11, the operation control unit 291 causes the display unit 40 to display that the plunger fixing nut 50 is not attached, notifies the user of the occurrence of the backlash by the method such as the alarm output as described above, and prompts the user to attach the plunger fixing nut 50.

In Embodiment 1 according to the invention, the normal state and the abnormal state can be detected in a binarized manner by repeatedly performing the aspiration and discharge operation. By increasing the number of times of repetitions (the number of times of reciprocating movement), the amount of the liquid stored in the dilution tank 11 in the normal state is changed. Accordingly, a risk of erroneous determination is reduced by storing the amount of liquid in the dilution tank 11 sufficient to determine the normality and abnormality.

Further, by setting a shape of a storage tank (the dilution tank 11 according to Embodiment 1) as a shape having a high aspect ratio, the amount of liquid required for sufficient determination of the normality and abnormality can be reduced by increasing a liquid height per unit liquid amount. Accordingly, the number of times of repetitions can be reduced, and a performing time of the present processing can be shortened.

A drive amount for the aspiration and discharge of the plunger 45 can be set to any one of distances from a minimum distance smaller than the backlash BL to a maximum distance larger than the backlash BL. The distances from the minimum distance to the maximum distance can be freely set in each automated analysis device. It is possible to implement a situation in which the liquid is discharged in the normal state and the liquid is not discharged in the abnormal state even when the drive is performed at a distance equal to or smaller than the backlash BL.

Further, when the distance is set to be larger than the backlash BL, the drive amount more than an amount corresponding to the backlash BL is set to perform the determination. In this case, for example, when the discharge operation is performed 20 times with the drive amount of 50 µl, 1000 µl of the liquid is stored in the normal state.

Meanwhile, when there is a backlash BL, a discharge amount decreases by an amount of the backlash BL from an original discharge amount by one aspiration and discharge operation. In the previous example, when there is 20 µl of a backlash, 50 µl - 20 µl = 30 µl of the liquid per one time is stored in the dilution tank 11 at the drive amount of 50 µl.

That is, since the discharge amount decreases by the amount of the backlash BL, the amount of the stored liquid changes in the normal state and the abnormal state. By detecting the change in the same manner as described above, the normality and abnormality determination can be performed.

The determination as of whether there is a plunger fixing nut 50 can be introduced, for example, during initialization after the electrolyte analysis device (automated analysis device) is started up.

In addition to the initialization, a program can be incorporated to perform processing automatically and periodically. Accordingly, soundness of the syringe pump unit 60 can be ensured.

As described above, according to Embodiment 1 of the invention, the automated analysis device enabling automatic detection of the failure in the plunger 45 in the syringe pump unit 60 can be implemented.

That is, the electrolyte analysis device (the automated analysis device) and a failure detection method of the automated analysis device enabling the automatic detection of whether the plunger fixing nut 50 is attached to the syringe pump unit 60 can be implemented.

The example described above describes an example in which the syringe pump unit 60 aspirates the internal standard solution contained in the internal standard solution bottle 3 and discharges the internal standard solution into the dilution tank (the liquid storage container) 11, and it is possible to automatically detect whether the plunger fixing nut 50 in the syringe pump unit of the dilute solution syringe 9 that aspirates the dilute solution contained in the dilute solution bottle 4 and discharges the dilute solution to the dilution tank 11 and the plunger fixing nut 50 in the syringe pump unit of the sipper syringe 10 are attached.

In addition, the example described above describes the syringe pump unit 60 that aspirates the internal standard solution from the internal standard solution bottle 3 and dispenses (discharges) the internal standard solution from the internal standard solution nozzle (the reagent nozzle) 25 into the dilution tank 11, and a sample dispensing mechanism that aspirates the sample from the sample container 15 and dispenses (discharges) the sample (specimen) from the sample probe 14 to a reaction tank 11 has the same configuration as the solenoid valve 19 on the discharge side, the solenoid valve 30 on the aspiration side, and the syringe pump unit 60 shown in FIG. 7. Therefore, also in the sample dispensing mechanism, the control device 29 can be configured to determine whether the amount of the discharged liquid is appropriate according to the flowchart shown in FIG. 8 and automatically detect whether the plunger fixing nut 50 is attached.

### (Embodiment 2)

Next, Embodiment 2 according to the invention will be described. Embodiment 2 is an example in which a biochemical analysis device is applied as an automated analysis device.

FIG. 12 is a partial explanatory view of the biochemical analysis device and is a schematic configuration view of a sample dispensing mechanism. In FIG. 12, by a sample dispensing probe 63, a sample is aspirated from a sample container 64 and discharged into a reaction container (liquid storage container) 65. An aspiration and discharge operation of the sample by the sample dispensing probe 63 is performed by operations of a solenoid valve 66 on an aspiration side, a syringe pump 61, and a solenoid valve 62 on a discharge side. Vertical movement and the rotational movement of the sample dispensing probe 63 are performed by a mechanism such as a motor, and illustration thereof is omitted.

A reagent aspiration and discharge unit that aspirates a reagent from a reagent container and discharges the reagent into the reaction container 65 in the biochemical analysis device has the same configuration as that of a sample aspiration and discharge unit. The sample aspiration and discharge unit will be described, and illustration and detailed description of the reagent aspiration and discharge unit will be omitted.

A syringe pump unit 61 shown in FIG. 12 has the same configuration as that of the syringe pump unit 60 according to Embodiment 1, and is provided with the plunger fixing nut 50 in a normal state.

Therefore, by performing the operations of the flowchart (FIG. 8) according to Embodiment 1, it is possible to determine whether the plunger fixing nut 50 is provided in the syringe pump unit 61.

The biochemical analysis device according to Embodiment 2 also includes a control device and a display unit similar to the control device 29 and the display unit 40 according to Embodiment 1, and has a liquid-level sensing function. The control device (a control unit) in the biochemical analysis device controls operations of the sample dispensing mechanism and a reagent dispensing mechanism, and analyzes the sample.

However, in Embodiment 1, liquid is discharged into the dilution tank 11, whereas in Embodiment 2, the liquid is discharged into the reaction container 65, and it is determined whether an amount of the discharged liquid is appropriate by using the liquid-level sensing function of a sample probe 63.

It is also possible to determine whether the plunger fixing nut 50 is provided in a syringe pump unit provided in the reagent aspiration and discharge unit in the biochemical analysis device.

The determination as of whether there is a plunger fixing nut 50 can be introduced, for example, during initialization after the biochemical analysis device (automated analysis device) is started up.

In addition to the initialization, a program can be incorporated to perform processing automatically and periodically. Accordingly, soundness of the syringe pump unit 61 can be ensured.

As described above, according to Embodiment 2 of the invention, the automated analysis device and a failure detection method of the automated analysis device enabling automatic detection of failure in the plunger 45 in the syringe pump unit 61 can be implemented.

That is, the biochemical analysis device (automated analysis device) enabling the automatic detection of whether the plunger fixing nut 50 is attached to the syringe pump unit 61 can be implemented.

Further, the example described above describes, the syringe pump unit 61 that aspirates the sample and discharges the sample from the sample probe 63 (sample nozzle) 63 into the reaction container 65, and a reagent dispensing mechanism that aspirates the reagent from a reagent container similar to the sample container 64 and discharges the reagent from a reagent probe similar to the sample probe 63 into the reaction container 65 has the same configuration as the solenoid valve 62 on the discharge side, the solenoid valve 66 on the aspiration side, and the syringe pump unit 61 shown in FIG. 12. Accordingly, by replacing the sample probe 63 in FIG. 12 with a reagent dispensing probe, the reagent dispensing mechanism is equivalent to the illustration. Also, in the reagent dispensing mechanism, the control device 29 can be configured to determine whether an amount of a discharged liquid is appropriate according to the flowchart shown in FIG. 8 and automatically detect whether the plunger fixing nut 50 is attached.

In Embodiments 1 and 2, the automatic detection of whether the plunger fixing nut is attached to the syringe pump unit can be performed only by either the reagent dispensing mechanism or the sample dispensing mechanism, or can be performed by both the reagent dispensing mechanism and the sample dispensing mechanism.

In the invention, the dilution tank 11 and the reaction container 65 can be collectively referred to as the liquid storage container.

In the examples described above, whether the plunger fixing nut 50 is attached is automatically detected, and a case in which the plunger fixing nut 50 is not appropriately fixed even though the plunger fixing nut 50 is attached and a case in which the amount of the discharged liquid is not an appropriate amount can also be detected. Therefore, failure when the plunger fixing nut 50 is not attached and failure when the plunger fixing nut 50 is not appropriately fixed are collectively defined as failure of the plunger.

Therefore, an object of the invention is to implement an automated analysis device and a failure detection method of the automated analysis device enabling automatic detection of failure in a plunger in a syringe pump unit.

### Reference Signs List

- 3:: internal standard solution bottle
- 4:: dilute solution bottle
- 5:: reference electrode solution bottle
- 8:: internal standard solution syringe
- 9:: dilute solution, syringe
- 10:: sipper syringe
- 11:: dilution tank
- 14:: sample probe
- 15:: sample container
- 17, 18, 19, 20, 30, 62, 66:: solenoid valve
- 24:: dilute solution nozzle
- 25:: internal standard solution nozzle
- 29:: control device
- 40:: display unit
- 42:: outlet-side flow path
- 43:: housing
- 44:: inlet-side flow path
- 45:: plunger
- 46:: base
- 47:: motor
- 48:: ball screw
- 49:: drive plate
- 50:: plunger fixing nut
- 60, 61:: syringe pump unit
- 63:: sample probe
- 64:: sample container
- 65:: reaction container
- 291:: operation control unit
- 292:: solenoid valve drive unit
- 293:: syringe pump unit drive unit
- 294:: sample probe drive unit
- 295:: liquid-level sensing unit

## Claims

1. An automated analysis device comprising:
a sample dispensing mechanism having a liquid-level sensing function and configured to discharge a sample into a liquid storage container;
a reagent dispensing mechanism configured to discharge a reagent into the liquid storage container; and
a control unit configured to control operations of the sample dispensing mechanism and the reagent dispensing mechanism and analyze the sample, wherein
the sample dispensing mechanism and the reagent dispensing mechanism each include a plunger configured to aspirate and discharge liquid and a plunger drive unit configured to drive the plunger, and
the control unit performs operation control by the plunger drive unit of at least one of the sample dispensing mechanism or the reagent dispensing mechanism such that the plunger moves reciprocally a predetermined number of times by any distance among distances from a minimum distance smaller than a backlash to a maximum distance larger than the backlash, and detects failure of the plunger by detecting an amount of liquid discharged into the liquid storage container by the liquid-level sensing function.

2. The automated analysis device according to claim 1, wherein
the operation control is performed such that the plunger moves reciprocally the predetermined number of times by a distance of the backlash.

3. The automated analysis device according to claim 2, wherein
the failure of the plunger is failure in which a plunger fixing nut configured to fix the plunger and the plunger drive unit is not attached to the plunger.

4. The automated analysis device according to claim 3, further comprising:
a display unit, wherein
when the control unit detects the failure in which the plunger fixing nut is not attached to the plunger, the control unit causes the display unit to display that the plunger fixing nut is not attached.

5. The automated analysis device according to claim 4, wherein
the automated analysis device includes an ion-selective electrode,
the reagent is a reagent adjusted to a predetermined ion concentration,
the liquid storage container is a dilution tank configured to allow the reagent to be discharged, and
the automated analysis device is an electrolyte analysis device configured to measure a concentration of specific ions in the sample.

6. The automated analysis device according to claim 4, wherein
the automated analysis device is a biochemical analysis device, and the liquid.container is a reaction container.

7. A failure detection method of an automated analysis device, the automated analysis device including:
a sample dispensing mechanism having a liquid-level sensing function and configured to discharge a sample into a liquid storage container;
a reagent dispensing mechanism configured to discharge a reagent into the liquid storage container; and
a control unit configured to control operations of the sample dispensing mechanism and the reagent dispensing mechanism and analyze the sample,
the sample dispensing mechanism and the reagent dispensing mechanism each including a plunger configured to aspirate and discharge liquid and a plunger drive unit configured to drive the plunger,
the failure detection method of the automated analysis device comprising:
performing operation control by the plunger drive unit of at least one of the sample dispensing mechanism or the reagent dispensing mechanism such that the plunger moves reciprocally a predetermined number of times by any distance among distances from a minimum distance smaller than a backlash to a maximum distance larger than the backlash; and
detecting failure of the plunger by detecting an amount of liquid discharged into the liquid storage container by the liquid-level sensing function.

## Amended claims

### Amended claims under Art. 19.1 PCT

**1.** (Amended) An automated analysis device comprising:
a sample dispensing mechanism having a liquid-level sensing function and configured to discharge a sample into a liquid storage container;
a reagent dispensing mechanism configured to discharge a reagent into the liquid storage container; and
a control unit configured to control operations of the sample dispensing mechanism and the reagent dispensing mechanism and analyze the sample, wherein
the sample dispensing mechanism and the reagent dispensing mechanism each include a plunger configured to aspirate and discharge liquid and a plunger drive unit configured to drive the plunger, and
the control unit performs operation control by the plunger drive unit of at least one of the sample dispensing mechanism or the reagent dispensing mechanism such that the plunger moves reciprocally a predetermined number of times by a distance of the backlash, and detects failure of the plunger by detecting an amount of liquid discharged into the liquid storage container by the liquid-level sensing function.

**3.** (Amended) The automated analysis device according to claim 1, wherein
the failure of the plunger is failure in which a plunger fixing nut configured to fix the plunger and the plunger drive unit is not attached to the plunger.

**4.** The automated analysis device according to claim 3, further comprising:
a display unit, wherein
when the control unit detects the failure in which the plunger fixing nut is not attached to the plunger, the control unit causes the display unit to display that the plunger fixing nut is not attached.

**5.** The automated analysis device according to claim 4, wherein
the automated analysis device includes an ion-selective electrode,
the reagent is a reagent adjusted to a predetermined ion concentration,
the liquid storage container is a dilution tank configured to allow the reagent to be discharged, and
the automated analysis device is an electrolyte analysis device configured to measure a concentration of specific ions in the sample.

**6.** The automated analysis device according to claim 4, wherein
the automated analysis device is a biochemical analysis device, and the liquid container is a reaction container.

**7.** (Amended) A failure detection method of an automated analysis device, the automated analysis device including:
a sample dispensing mechanism having a liquid-level sensing function and configured to discharge a sample into a liquid storage container;
a reagent dispensing mechanism configured to discharge a reagent into the liquid storage container; and
a control unit configured to control operations of the sample dispensing mechanism and the reagent dispensing mechanism and analyze the sample,
the sample dispensing mechanism and the reagent dispensing mechanism each including a plunger configured to aspirate and discharge liquid and a plunger drive unit configured to drive the plunger,
the failure detection method of the automated analysis device comprising:
performing operation control by the plunger drive unit of at least one of the sample dispensing mechanism or the reagent dispensing mechanism such that the plunger moves reciprocally a predetermined number of times by a distance of the backlash; and
detecting failure of the plunger by detecting an amount of liquid discharged into the liquid storage container by the liquid-level sensing function.

Statement under Art. 19.1 PCT
The Applicant, who received the International Search Report relating to the above identified International Application transmitted on February 15, 2022, hereby files amendmentt under Article 19(1) as in the attached sheets.

We hereby would like to amend the claims 1, 3 and 7, and also cancel the claim 2. We added the feature described in claim 2 into claim 1 and claim 7. We amend claim 3 to be dependent on claim 1.

Basis for Amendment

Amendment of claims 1 and 7 are supported by the paragraphs [0032] and [0037] of the specification and Fig. 4.

The Applicant also files as attached herewith a brief statement explaining the amendment.
